# EUROPEAN PATENT SPECIFICATION

(11) **EP 4 656 385 B1**
(45) Date of publication and mention of the grant of the patent: **02.12.2026**
(21) Application number: 25207288.9
(22) Date of filing: 04.04.2018
(51) Int. Cl.: B29C 64/106, B29C 64/40, B33Y 10/00, B33Y 30/00, B33Y 70/00

(54) **ADDITIVE MANUFACTURING IN GEL-SUPPORTED ENVIRONMENT**
GENERATIVE FERTIGUNG IN GELGESTÜTZTER UMGEBUNG
FABRICATION ADDITIVE DANS UN ENVIRONNEMENT SUPPORTÉ PAR GEL

(30) Priority: 04.04.2017 US 201762481358 P
(43) Date of publication of application: 03.12.2025
(62) Document number(s) of the earlier application(s) in accordance with Art. 76 EPC: 18720491.2 / 3 600 839
(73) Proprietor: Massachusetts Institute of Technology, Cambridge, MA 02139 (US); Steelcase Incorporated, Grand Rapids, MI 49508-7594 (US)
(72) Inventor: Tibbits, Skylar, J.E., Cambridge, 02139 (US); Guberan, Christophe, Cambridge, 02139 (US); Laucks, Jared, Smith, Cambridge, 02139 (US); Kernizan, Schendy, G., Cambridge, 02139 (US); Hajash, Kathleen, Sofia, Cambridge, 02139 (US); Sparrman, Bjorn, Eric, Cambridge, 02139 (US); Noll, Paul, Grand Rapids, 49508-7594 (US)
(74) Representative: Bosch Jehle Patentanwaltsgesellschaft mbH

(56) References cited:
- WO-A1-01/78968
- WO-A1-2016/130953
- US-A1- 2016 067 918

## Description

### BACKGROUND

Traditional manufacturing typically involves molded production of parts and other components having a fixed shape, and those individual components are frequently assembled into more complex structures. The process is often expensive and can involve a significant amount of manual labor, and molds used in the production are expensive to manufacture and have singular design structure.

Additive manufacturing refers to a collection of techniques for making three dimensional objects by layerwise addition of material. Stereolithography (SLA) is an additive manufacturing technique that involves selective photopolymerization of polymers upon exposure to UV light.

Selective laser sintering (SLS), direct metal laser sintering (DMLS), and laser melting (SLM) are additive manufacturing techniques that involve distributing a thin layer of a powder onto a substrate plate. In SLS and DMLS, a laser selectively sinters the powder. In SLM, a laser selectively melts the powder. Unlike SLA, which is typically used with polymers, SLS, DMLS, and SLS can be used with metals.

Fused deposition modeling (FDM), sometimes referred to as fused filament fabrication (FFF), an object is built by selectively depositing melted material in a predetermined path layer-by-layer.

One problem with existing technologies is that they are too slow. Another problem with existing technologies is that manufacturing complex geometries, such as unsupported overhangs, can require fabricating a support structure that is subsequently removed during post-processing. Fabricating support structures often increases the cost of designing a part, and can lead to increased machine time to fabricate the part. In addition, some or all of the support structure is discarded, which increases the cost of materials to fabricate the part. WO 2016/130953 A1 discloses a method or apparatus for creating a three-dimensional tissue construct of a desired shape for repair or replacement of a portion of an organism.

### SUMMARY

The invention is defined by the appended independent claim. Embodiments of the invention are indicated in the appended dependent claims.
The methods described herein pertain to additive manufacturing techniques that can be used to make three-dimensional objects.

Described herein is a method of making a three-dimensional object as recited in claim 1.

Depositing the solidifying material through the nozzle can further include varying a rate at which the solidifying material is deposited, for example by varying pressure applied to one or more pistons to extrude the solidifying material. Changing the position of the nozzle within the gel can further include changing the position of the nozzle at varying speeds.

The nozzle can be affixed to a multi-axis machine. Changing the position of the nozzle through the gel can include moving one or more axes of the multi-axis machine to which the nozzle is affixed. Changing the position of the nozzle within the gel can include changing a position of the container of gel.

Solidifying the solidifying material can include exposing the solidifying material to light or heat. Solidifying the solidifying material can include allowing the solidifying material to cool. Solidifying the solidifying material can include exposing the solidifying material to light while depositing the solidifying material through the nozzle.

The solidifying material can be a polymer, a rubber, a pulp, a foam, a metal, a concrete, or an epoxy resin. The rubber can be a silicone rubber.

The solidifying material can have a hardness between about Shore 00-10 and about Shore 90D when solidified.

The solidifying material can be a foam. The solidified foam can have a density of about ca. 48 kg/m³ (3 lb/ft³) to about ca. 480 kg/m³ (30 lb/ft³).

The gel is a carbomer gel. The gel can have a viscosity between about 20 Pa s (20000 centipoise) and about 50 Pa s (50000 centipoise).

The nozzle can have a circular-shaped, rectangular-shaped, square-shaped, diamond-shaped, V-shaped, U-shaped, or C-shaped tip through which the solidifying material is deposited.

The solidifying material can include two compounds that co-polymerize. Solidifying the solidifying the solidifying material can include allowing the two compounds to co-polymerize. The nozzle further includes a mixing portion that mixes the two compounds as they are deposited through the nozzle.

Changing the position of the nozzle can include changing the position of the nozzle within the gel in three through eight axes simultaneously, for at least a portion of time. Changing the position of the nozzle can include changing the position of the nozzle within the gel in five through eight axes simultaneously, for at least a portion of time. Changing the position of the nozzle include changing the position of the nozzle within the gel in three through six axes simultaneously, for at least a portion of time. Changing the position of the nozzle can include changing the position of the nozzle within the gel in six axes simultaneously, for at least a portion of time.

Changing the position of the nozzle can include changing the position of the nozzle to deposit solidifying material onto, around, or within another object within the gel.

In an embodiment not covered by the appended claims, the nozzle can be a first nozzle, the solidifying material can be a first solidifying material, and the solid material can be a first solid material. The method can further include positioning a second nozzle within the gel inside the container of gel; changing the position of the second nozzle within the gel while depositing a second solidifying material through the second nozzle, whereby the gel supports the second solidifying material at the position at which the second solidifying material is deposited, and whereby depositing the first and second solidifying materials is performed so that the first and second materials contact each other in deposited state; and solidifying the second solidifying material to form a second solid material, whereby the first and second solid materials are joined together as the three-dimensional object. The first and second nozzles can have tips with different shapes. The first and second solidifying materials can be different.

Described herein is an apparatus for making a three-dimensional object. The apparatus can include a nozzle affixed to a multi-axis machine; a means for extruding a solidifying material through the nozzle; and a container of gel, The apparatus as such is not covered by the appended claims.

The apparatus can be configured as described herein to perform the methods described herein.

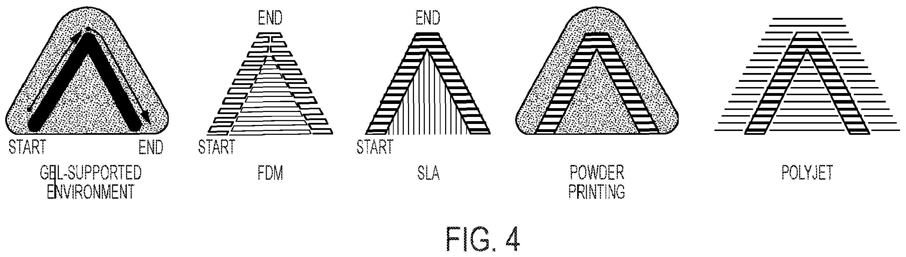

The methods described herein confer a number of advantages. Notably, the methods are fast. Compared to other additive manufacturing processes, such as FDM and SLM, printing in a gel suspension in the disclosed embodiments of the additive manufacturing methods and systems described herein can be much faster, potentially orders of magnitude faster, for printing parts with complex geometries, such as those illustrated in FIG. 4. In some instances, the methods may be 300x faster, or more, than existing processes. Since it is not necessary to deposit support structures, post-processing of a manufactured object is substantially reduced. For example, post-processing can simply include washing the object in water. It is not necessary to cut away or otherwise remove support structures manually. The methods can also be used to manufacture large objects. The size of the container of gel is the only factor that limits the size of the object that can be manufactured.

Even though speed and size can be increased compared to known techniques, the manufactured objects are of a high quality. The solidifying materials that can be used in the methods described herein can be industrial-grade materials. For example, the methods described herein can be used to fabricate objects with silicone rubbers, whereas other methods may require the use of elastomers that are not truly silicones. The methods can also be used to fabricate materials from foams. The methods can also be used to fabricate materials from rigid polymers, whereas other methods may require sintering powders, and the resulting objects may have inferior mechanical properties. Since the methods described herein do not require layer-by-layer deposition, the objects that are formed do not have stratified layers, which can be mechanically inferior to a product that is formed of a homogenous cross-section.

### BRIEF DESCRIPTION OF THE DRAWINGS

The foregoing will be apparent from the following more particular description of example embodiments, as illustrated in the accompanying drawings in which like reference characters refer to the same parts throughout the different views. The drawings are not necessarily to scale, emphasis instead being placed upon illustrating embodiments.
FIG. 1 illustrates a 3-axis gantry-style machine with a 2-part mixing deposition system printing a 3-dimensional part in a gel suspension.
FIG. 2 illustrates a 6-axis robotic arm with a two-component mixing deposition system printing a 3-dimensional part in a gel suspension.
FIG. 3 illustrates the deposition system with two-component solidifying material that is pneumatically controlled to flow through the mixing tip for thorough mixing and extrusion out the nozzle.
FIG. 4 illustrates a comparison between different printing processes for the same diagonally-shaped part.
FIG. 5 illustrates a variety of nozzle geometries, sizes and the resultant printed path.
FIG. 6 illustrates a large tank of the gel suspension medium that prints a full-scale chair, suspended in 3D space.
FIG. 7 illustrates a printing portions of a chair onto and/or around a metal frame inserted into a large tank.

### DETAILED DESCRIPTION

A description of example embodiments follows.

As used herein, the term "gel" refers to a colloid in which particles are dispersed in a liquid medium. Most commonly, the dispersed particles are cross-linked particles. The gels can be thixotropic. Most gels are predominantly liquid by weight, but exhibit solid-like material properties due to the three-dimensional cross-linked network within the liquid. According to the invention, the gel is a carbomer gel.

The methods described herein pertain to a method of additive manufacturing within a gel suspension environment. Typically, the gel is held within a container. A solidifying material, which can be a molten or liquid form, is deposited with through nozzles and tool paths.

In some embodiments, a multi-axis machine be used to control a path of a nozzle through the gel. Examples of a multi-axis machines include gantry-type systems and industrial robot arms. In general, a wide variety of multi-axis machines and robotic arms are available. Gantry-style machines typically provide for three axes of movement: the x-, y-, and z-axes. Frequently, robotic arms are described according to the number of axes of rotation the arm possesses. For example, a five-axis robotic arm can rotate at five distinct axes of rotation, and a six-axis robotic arm can rotate at six distinct axes of rotation. In additional to rotational axes, a robotic arm can also be affixed to a linear rail or gantry-style machine to provide linear axes of movement in addition to the rotational axes. As an example, a six-axis robotic arm affixed to a linear rail can move in seven axes. As another example, a six-axis robotic arm affixed to a gantry-style machine can move in seven, eight, or nine axes, depending on the particular movements of the gantry-style machine.

In addition to axes of movement provided by a multi-axis machine, the container holding the gel can also be moved. For example, the container of gel can be placed on a multi-axis gantry-style machine, which can move the container of gel in three axes that are separate and distinct from axes of movement of the multi-axis machine to which the nozzle is affixed. The container of gel can also be moved along a rotational axis as well.

In some embodiments, the container of gel moves along one axis and the nozzle moves along two axes. In some embodiments, the nozzle is stationary, and the tank moves along two or three axes. In some embodiments, the tank is controlled by a gantry-style machine

In some embodiments, the nozzle is controlled by a winch robot, which can also be referred to as a cable robot. In these embodiments, a plurality of cables control movement of the nozzle in the x-, y-, and z-directions.

The combination of these components allows for extremely fast printing with a variety of materials. For example, molten polymers can be deposited through the nozzle and solidified. For example, curing can include polymerization, which can be photoinitiated. In other embodiments, a polymer can be heated to accelerate a polymerization reaction rate. Chemically-cured, photo-cured or air/water-cured plastics, rubbers, foams and other liquids can be printed at large-scales only limited by the size of the container or robotic apparatus. Different nozzles can be used to control the flow rate, size, direction and cross-sectional geometry. Similarly, complex 3-dimensional tool paths can be created to print in any orientation and direction in 3D space.

Existing additive manufacturing processes have had limited industrial applications due to their lack of speed and size compared with other industrial manufacturing processes. The methods described herein can increase the speed of printing by using a gel suspension that does not require support materials nor slow printing speeds while waiting for the material to harden, like other 3-dimensional printing processes. Manufacturing speed is also increased because the objects are not produced layer-by-layer, as in other additive manufacturing processes (e.g., FDM, inkjet-like printing using liquid binder and powder (e.g., as available from ZCorp, acquired by 3D Systems), SLA, SLS, and Polyjet printing (e.g., CONNEX printers available from Stratasys Ltd)) that require excessive time to print large structures. Rather, parts can be printed in three-dimensional space.

FIG. 4 illustrates a comparison between different additive manufacturing printing process for the same diagonally-shaped part. In FDM printing, the part is divided into horizontal slices, and there is a horizontally sliced support region printed to support the overhanging portion. In SLA printing, the part is sliced horizontally and small vertical supports are printed to support the overhanging portion. In a powder-based system (e.g., SLS or ZCorp), the part is sliced horizontally and the surrounding powder supports the overhanging portion. In the gel-supported environment methods described herein, the part is printed directly in the orientation of the component, without horizontal slicing, effectively increasing the speed of printing and structural continuity of the part, and the surrounding gel acts at the support material.

Post-processing time is also dramatically decreased because supports structures are not necessary. Traditionally, these support structures are manually removed or dissolved. In the method, printing time is only limited by the speed of the machine and curing time of the deposited solidifying material (from seconds to hours depending on the composition).

The scale of printing can vary. Extremely small scale structures with fine features can be made by using a smaller nozzle tips. Larger structures with larger features can be made by using a larger nozzle.

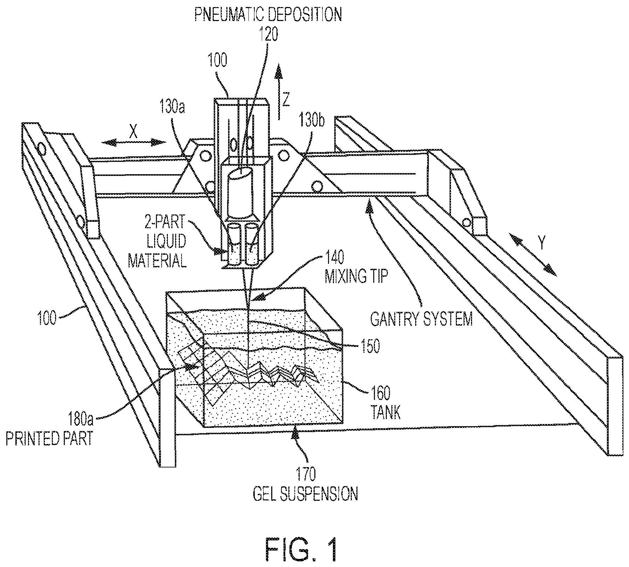

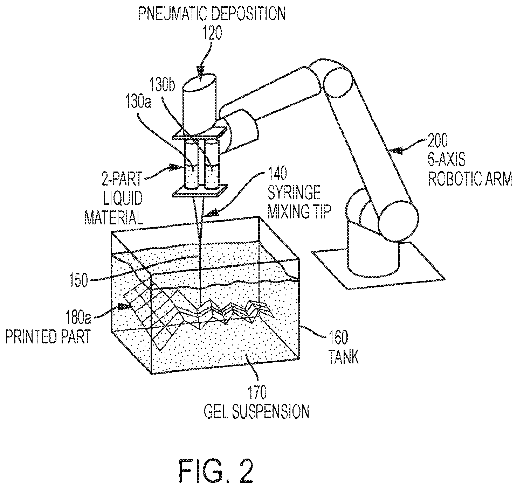

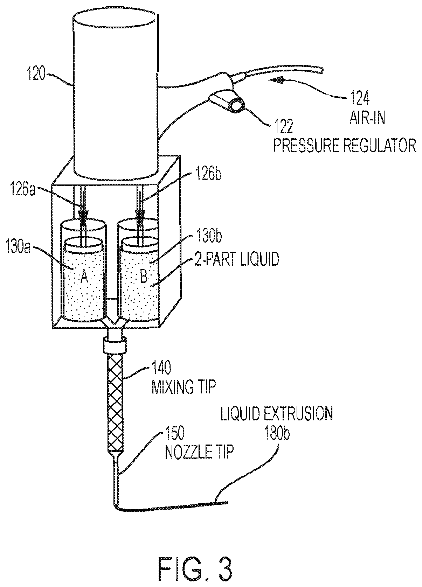

FIG. 1 is an illustration of a three-axis gantry-style machine 100 used with a two-part material. An arm 110 is affixed to the gantry system 100 such that the arm can be moved in the x-, y-, and z-axes, as indicated. In this particular embodiment, pneumatic deposition can be provided through pneumatic control system, which includes a chamber 120 for exerting force on pistons 126a and 126b (see FIG. 3). Two chambers 130a and 130b are provided that hold two different materials. These materials are mixed in mixing tip 140 and deposited through nozzle 150. Container or tank 160 holds a gel 170. As arm 110 moves, nozzle 150 moves through the gel and the two materials are extruded into the gel from chambers 130a and 130b to form a three- dimensional object (printed part) 180a. FIG. 2 is an illustration of a six-axis robotic arm 200 with a two-part material. The remainder is substantially similar to FIG. 1.

FIG. 3 is an illustration of a deposition system for a two-part material that is pneumatically controlled to flow through the mixing tip. Air enter through tube 124, passes through pressure regulator 122, and enters into chamber 120, whereby the air provides a downward force on pistons 126a and 126b to force material out of chambers 130a and 130b, respectively. A solidifying material (e.g., a liquid) 180b is extruded through the nozzle tip 150.

As an alternative to the pneumatic deposition illustrated in FIG. 3, an electrically-activated screw deposition system can be used. For example, a motor can be used to exert downward force on pistons 126a and 126b.

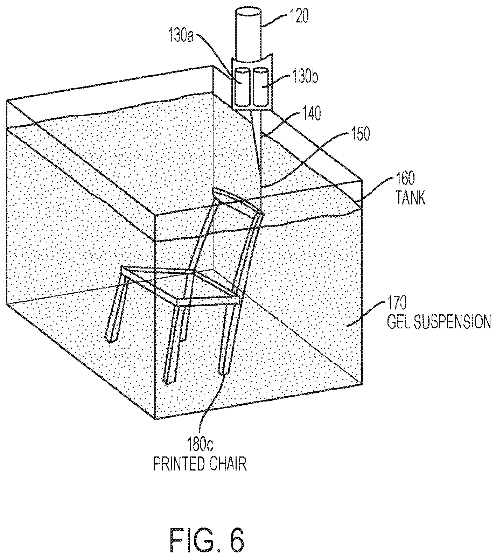

FIG. 6 is an illustration of use of the methods described herein to make a chair 180c.

### 1. Deposition of Solidifying Materials

### 1.1. Materials

The methods described herein use a deposition system to deposit solidifying materials of varying quantities and viscosities. The methods are unique compared to other additive manufacturing processes because they allows for easy liquid material flow/deposition, faster printing speeds and the use of industrial-grade materials. In some embodiments, the solidifying material is a single component. In other embodiments, the solidifying material is two separate compounds that co-polymerize.

To date, a variety of plastics, foams and rubbers that are either one-part or two-part air-cured or chemically-cured materials have been tested. Most other processes rely on powder material with adhesive binders, powders with selective sintering, UV-curable polymers or hot-end filament extruders which inherently limit the materials available and the final material properties of the printed structures. The methods described herein can be used to print with industrial-grade materials, such as polyurethane (PU) rubber, foam and plastics, resins, silicone, biological materials, liquid wood pulp, concretes, liquid metals or any other solidifying material, which greatly broadens the possibilities for industrial printing applications.

Examples of foams include urethane and silicone foams. As used herein, foam refers to a material having trapped pockets of gas in a liquid or solid. Foams are typically deposited in a liquid form, and then solidified.

Examples of plastics include chemically-cured plastics, such as urethanes, acrylics, and poly(methyl methacrylate), as well as radiation-cured plastics and moisture-cured plastics.

Examples of resins include epoxy resins, phenol-formaldehyde resins, anaerobic resins, and cyanoacrylates.

Examples of silicones include addition and condensation-cured silicone rubbers with a hardness ranging from Shore 00-10 to Shore 60A when solidified.

Examples of urethane rubbers include materials with a hardness of ranging from Shore 10A to Shore 90D.

Examples of biological materials include bacteria, antibodies, lignin, growth media, yeast, cellular matrices, eukaryotic cells, non-eukaryotic cells, fungal medium, seed/plant growth.

Examples of liquid wood pulp include cellulose, lignin and other paper fiber mixes with both natural and synthetic fibers.

Examples of concretes include Portland cement or other hydraulic cements that harden due to a chemical reaction with water.

Examples of liquid metals include metals and alloys that have a melting point below about 100°C, such as field's metal, wood's metal, and rose's metal.

The methods do not require layer-by-layer deposition. Rather, the nozzle can move and extrude in any orientation in 3-dimensional space. As a result, the final printed product can have a much stronger and more uniform material consistency and surface finish than products resulting from layer-based printing processes.

### 1.2. Deposition

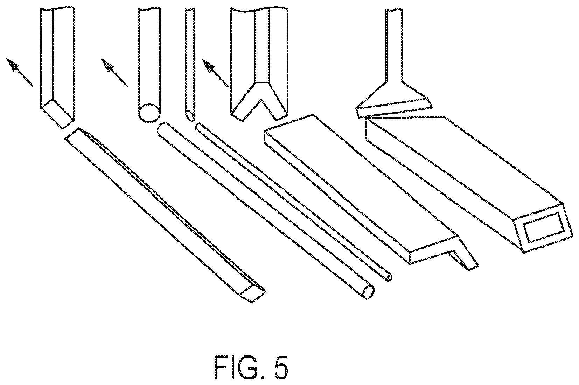

The methods described herein can use a syringe-type nozzle having an opening with a wide variety of shapes and sizes. The methods can also use a two-part liquid extruder that can extrude input materials at a ratio of 1:1, 2:1, 1:2, or other ratios. The nozzle sizes and shapes can accommodate different viscosities and different extrusion shapes or features sizes. For example, a more viscous material may require a larger nozzle and a higher pressure while a less viscous material can use a smaller nozzle and lower pressure. The extrusion pressure can be created with either pneumatics or mechanical actuation. Both actuation techniques can be controlled to precisely deposit the desired amount of liquid, stopped to eliminate residual liquids from extruding, or even potentially reversed to remove material in a form of physical deletion. The nozzle size can also increase the feature size of the printed part and allow for increased resolution, or increase the material quantity and speed to decrease the resolution. The speed of the deposition, size of the nozzle and the pressure in the cylinder are interrelated process variables. For example, to print faster, either the nozzle size or the pressure can be increased; otherwise, the volume of the material extruded per unit distance traveled by the nozzle decreases as the nozzle speed increases. In other words, varying the nozzle size or applied pressure can influence that rate at which the solidifying material is extruded through the nozzle, and therefore the rate at which the solidifying material is deposited. The shape of the nozzle opening can also vary to create different effects in the printed part, resembling a 3-dimensional calligraphy technique. Nozzles having circular-shaped, square-shaped, diamond-shape, V-shaped, U-shape, C-shape or virtually any other shape nozzle can be used to create different feature profiles. Examples of nozzle shapes are illustrated in FIG. 5. Any of the components can be used interchangeably in the system, or simultaneously. For example multiple nozzles can be used simultaneously to deposit two different materials at the same time. Or, different nozzles can be swapped out with a tool-changer to allow for the creation of a single, complex design with different feature sizes, materials and/or profiles.

According to the invention, a mixing tip 140 can also be used to thoroughly mixes a two-part solidifying material for chemical curing. The liquid materials can have a variety of cure-times from a few seconds to minutes or hours. The liquid material can also have a variety of final-cured properties such as high stiffness (e.g., acrylonitrile butadiene styrene (ABS) plastics); elasticity (e.g., rubbers); expanding, flexible, or rigid foams; solubility (liquids); brittleness; high-temperature resistance, or theoretically any other property. The liquids can also be virtually any color and viscosity with the use of fillers and color additives. All of these properties can be varied with independent cartridges, continuous-fill mechanisms to change the properties on-the-fly, multiple-nozzles for multi-material printing or tool-swapping to allow for different materials in different locations.

### 2. Gelatinous Printing Media

### 2.1. Composition

A gel is used as the media within which the solidifying material is deposited. When the solidifying material is deposited, the gel supports the solidifying material such that the solidifying material is suspended within the gel.

According to the invention, the gel is a carbomer gel. One particular example of a gel that has been used is a neutralized polyacrylic-acid (carbomer 940) gel. Between 1% and .25% by weight of carbomer 940 is thoroughly mixed in water such that no clumps remain. At this point the mixture has a low viscosity and a low pH. A solution of sodium hydroxide (NaOH) in water is incrementally added to the carbomer mixture and slowly stirred as to avoid air bubbles until the pH is neutralized. At this point the mixture transforms into a thick gel.

Adjusting the pH can adjust the viscosity of the gel, which allows the gel to accommodate and support objects of differing density, as discussed in the following section.

Adjusting the viscosity of the gel also influences how the nozzle passes through the gel as well as features of the printed structure. For example, if both the gel and solidifying material have a low viscosity, then the solidifying material may not remain in precisely the location where it is deposited. Increasing the viscosity of the gel can ensure that the deposited solidifying material remains within the path where it was deposited rather than flowing through the gel. Alternatively, in some embodiments, the viscosity of the solidifying material can be increased if the viscosity of the gel is too low.

### 2.2. Controlling Buoyancy of Objects

The amount of carbomer 940 used in the gel affects the subsequent suspension of foreign materials, liquid or solid.

A higher percentage of carbomer results in a gel with higher viscosity and shear stress. In this condition the gel is able to suspend materials with densities much lower or higher than its own. At a rate of 1% carbomer by weight, the gel is able to suspend a 1/4 inch lead sphere.

A lower percentage of carbomer results in a gel with lower viscosity and shear stress. In this condition the gel is unable to suspend materials with densities much lower or higher than its own. At a rate of .25% carbomer by weight, the gel is unable to suspend a 1/4 inch aluminum sphere.

The gel composition can be modified so that it is suitable for formation of the desired object. Typically, the gel can have a viscosity between about 20 Pa s (20000 centipoise (cP)) and about 50 Pa s (50000 centipoise (cP)).

### 2.3. Self-Healing

A gel can self-heal in that after the nozzle passes through the gel, the gel reforms to close the gap in the void area where the nozzle has passed. As a result, air pockets within the gel are minimized. A lower shear stress (slower nozzle speed) permits the gel to self-heal quickly as the nozzle passes through. As a result, deposition of solidifying material in lower viscosity gel better maintains the form of the deposition nozzle orifice. High viscosity gel requires more time to self-heal. As a result, liquid material is able to flow into the cavity left by the tool before the gel is able to self-heal. This effectively elongates circular depositions into a teardrop shape. Thus, the shape of the liquid material varies in proportion to relative viscosity of the gel and speed of the nozzle passing through.

### 3. Fabrication Machine

### 3.1. Gantry-System

The liquid extrusion process within the gel suspension can be precisely controlled with at least a three-axis CNC machine. With a three-axis, gantry-style machine, the cartridge and nozzle are attached to the Z-axis, and three-dimensional structures can be printed within the gel. The nozzle can move freely in all three linear dimensions (x-, y-, and z-dimensions), however the nozzle cannot rotate around the z-axis (when used on a 3-axis machine). Typically, the printed part is constrained to 3-dimensional geometries with vertical nozzle orientations.

A five-axis gantry-style machine can also be used. In a five-axis machine, the nozzle can move in all three linear dimensions (x-, y-, and z-dimensions), as well as rotate on the A- and B-axes. Since the nozzle can rotate, the solidifying material does is not necessarily dispensed from a vertical orientation.

### 3.2. Industrial Robot Arm

In other embodiments, a six-axis industrial robot can be used to move the nozzle through the gel. Typically, a six-axis industrial robot allows for rotation along six different axes. As a result, the nozzle can be oriented in a wide variety of directions, allowing for printing sideways or rotating the nozzle as it moves in space. Similarly, greater freedom over the orientation of the robot and the relationship to the printing axis is allowed.

### 3.3. Other Machines

Other deposition machines are also possible like "delta" robots, cable bots, or even distributed printing processes with autonomous robots. This process does not require an extremely specific machine, rather it can accommodate just about any computer numerically controlled (CNC) machine that can move in three dimensions with multiple axes of control.

### 3.4. Scale

Both of these methods can be scalable to large (many cubic meters) or small (cubic millimeters) print volumes with either high precision and/or high-speed depending on the application. If a small part with high precision is needed, a gantry-style machine can be used with extremely precise syringe tips in a small gel volume. Conversely, if a very large-scale structure is needed, a large gantry-machine (10's of meters), or large industrial robot (5 meters +) can be used. Theoretically there is no limit to the size of the machine, however a large gel-bath is required and as the scale increases, the amount of gel required and the size of the container increases. For industrial products on the order of millimeters to multiple meters, this process is very viable and may provide an extremely fast and precise printing process with industrial-grade materials.

### 3.5. Speed & Multiple Machines

The outlined fabrication machines can operate at slow speeds or fast speeds, depending on the application, the time constraint or the features of the printed part. Typically, the robot arm controlling the nozzle will need to move more slowly for smaller parts and for smaller features of a part. For larger parts and larger features of parts, the robot arm controlling the nozzle can move more quickly. Alternatively, multi-robot printing processes can be used where large features are created with one arm and smaller features are created simultaneously with another arm. This can also allow for different materials or interlocking parts, or other features that would not be feasible with a single machine.

### 4. Speed

### 4.1. Support Material

The present invention can be far faster than existing printing process for a number of reasons. The first element that dramatically increases speed is the elimination of extra design material for support. Since the viscous gel can support the deposited material, there is no need for a printed support material like FDM, SLA or many other processes. This dramatically decreases the amount of material that needs to be printed, the time it takes to print, and also the time to remove the excess material from the printing. For example, a diagonal part with overhanging features can be printed directly in 3-dimensional space without the need for a support wall or column.

By removing this limitation, extremely complex structures can also be printed that would not otherwise be possible with other printing processes that require supports. For example, a structure that is hollow, but has a complex shape within the hollow cavity would be difficult to build in other processes because the support material would need to fill the cavity of the printed part and span from one printed part to another. This extra material may not be possible to remove and may limit the possible complexity of the shape. In an SLA or powder-based printing processes, sometimes the support material can be trapped within the cavity and dramatically increase the amount of material that a part requires.

### 4.2. Post-Printing-Process

By printing with chemically or air-cured solidifying materials within a viscous gel, the methods described herein reduce or eliminate complex and time-consuming post-processing. SLA printing processes typically require a support removal step, which can require manually breaking off the support structures. There is also a cleaning process in an alcohol bath to remove the uncured polymers. These steps can be potentially toxic, costly and extremely time consuming. FDM and Polyjet printing typically involve a support-dissolving step, where the part is put in a bath to remove the support material. This can also be toxic and extremely time consuming. After printing a part for many hours, it then needs to sit in a bath for many minutes or hours while the supports are removed. In powder-based printing processes there is an excavation process that is very messy and time consuming where the user needs to dig out the part from the powder bath. With the methods described herein, when the part is printed it can be immediately cured (or time-delayed depending on the material selection), and then it can be immediately removed from the gel by simply reaching in and taking out the part. The part can then be simply sprayed with water to remove the excess gel and it is finished, ready for use. This simple post-printing-process can dramatically increase the application of 3D printing in industrial settings, reduce the hazards and allow for printing to become more accessible to a wider audience and increase the speed of the post-process.

### 4.3. Layer Printing vs. Spatial Printing

With the spatial liquid deposition in the viscous gel media, any complex structure can be printed directly in three-dimensional space without slicing and layer-based printing software file preparation steps.

In contrasts, layer-by-layer processes requires fairly complex software and produce large file sizes. The slicing process also frequently increases the failure-rate or the surface roughness of the printed part. Because the complex 3-dimensional model needs to be algorithmically reconstructed with 2-dimensional paths, features can be left out, the path can be incorrect or it can reduce the resolution of the part due to the layer-by-layer material texture. Similarly, this layer-by-layer process dramatically decreases the strength of the printed part due to inhomogeneity. The methods described herein do not have a layer-by-layer printing process and can create completely homogenous cross sections within a printed path in any orientation in 3-dimensions.

Similarly, in the methods described herein, a printed part can be extremely fast to print as compared with layer-by-layer processes. With layer-by-layer printing, the time of printing can be calculated by the linear length of each 2-dimensional path times the number of z-height slices. This dramatically increases the time it takes to print each layer. In our process the nozzle can print in any orientation with any feature size and does not need to print layer-by-layer, dramatically increasing the speed and feature possibilities of a printed part or object.

### 5. Usage

### 5.1 Printing in three-dimensional space

The methods described herein allows for objects at small or large scales to be printed reminiscent of 2-D drawing or sketching yet in 3-dimensional space. In some embodiments, the nozzle can be manually moved through the gel by hand without aid of a multi-axis machine. In some embodiments, the robotic arm or gantry-style machine can be manually moved through the gel by hand. Manual movements of the robotic arm or gantry-style machine can be recorded by software as the arm or machine are moved, thereby creating a recording of a movement that can be replayed for future automated production. In other embodiments, the gantry-style machine or robotic arm can be controlled with a controller.

In some of the methods described herein, the structure to be fabricated can be sent to the robot arm as a curve in 3D space. As an example a three-dimensional curve can be generated in modeling software. The curve can be exported as a series of points in 3D space that the machine will follow during the printing process. The output of the modeling software is typically in machine code (e.g., Gcode, ShopbotCode, URCode, or a variety of other types of code files linked with the specific CNC machine that is being used). This process eliminates the need to use an STL file (or mesh geometry file) that is usually exported from modeling software and subsequently imported into a slicing software that slices the STL/Mesh geometry into layers that create tool paths for the machine to follow, layer-by-layer. The slicing software generates the machine code for a typical printer. In methods described herein that involve the use of a multi-axis machine, the slicing step is not necessary, and the machine code is generated from a series of 3-dimensional points in space based on the original 3D curve. The machine code can include other parameters and values. For example, the machine code can include parameters that increase or decrease the air pressure (e.g., to turn the air pressure on or off); to adjust the speed of the machine (e.g., to adjust the speed of the nozzle as it is moving through the gel); and to adjust the orientation of the nozzle as the machine moves the nozzle through the gel.

When connected with design software, a modeling tool or VR headset, the methods described herein can allow for a designer to sketch and design in mid-air while simultaneously printing at the same speed and same scale, within the gel. This 1:1 design to production speed and length-scale has not been realized before due to time constraints inherent with physical fabrication. Most fabrication processes, even for quick sketch models, take significant amounts of time and therefore cannot be as fast as sketching. With this technology a printed part can be created at the same speed that a robot or a human moves their arm through the air.

### 5.2 Printing onto Other Objects

If the fabrication machine (gantry or robot) picks up a physical object and places it into the gel, the machine can then liquid print onto, around or within the physical object. This capability allows for sequential printing of materials with a variety of properties in one build. Using the fabrication of a chair as an example, a structure (in this case, a metal structure) produced by another fabrication process can be placed within the gel. The back of the chair, which typically is made of a soft rubber material, can be printed around the placed metal structure. Next, the robot can switch to printing a foam material as the seat cushion of the chair, connected directly to the metal structure. This process can incorporate fastener details like screws, bolts or other connectors and can allow for hybrid fabrication processes. Many physical objects (flexible or rigid) with different materials can be deposited or placed within the gel acting as substrates for further build processes. Even a textile can be placed in the gel and printed onto.

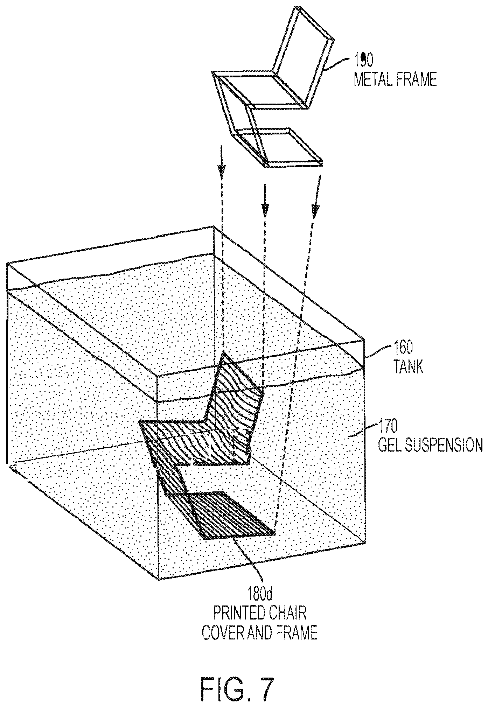

FIG. 7 is an illustration of using the methods described herein to fabricate a chair. A metal frame 190 can be placed into the tank 160 of gel 170. The printed chair cover and frame 180d can be printed onto and/or around the metal frame 190 to produce the spanning flat surfaces of the chair. This process allows for hybrid printing scenarios incorporating other parts (e.g., industrially-produced parts) in the gel suspension.

### 5.3 Cure-time

The printed solidifying material can be designed to cure extremely quickly or slowly, depending on the application. A faster cure time can reduce the overall fabrication time while a slower cure time can allow for more thorough bonding when printing intersecting paths. A slower cure-time can also enable bonding of the liquid printed structure with physical objects that have been placed into the gel

### 5.4 Complex Tool Paths

Another potential advantage of this technique is the possibility of fully interlocking, 3-dimensional parts being made without support material or filled cavities. For example, printing a woven or knit structure may now be possible utilizing multiple robots that deposit liquid simultaneously, or by complex tool paths that would otherwise not be possible. With a 6-axis industrial robot, complex tool paths can be used, almost like calligraphy, with different nozzle extrusion orientations. Another possibility is printing underneath, next to or on top of other printed/physical objects within the gel.

### 5.5 Post-Process

Different forms of post-curing can be incorporated such as UV- or temperature-sets to change the properties of the material. After removing the part from the gel bath, it can be easily washed-off with water to remove excess gel, or coated with some material to strengthen it, color the part, further cure the part or any number of post-processing capabilities. For example, if a ceramic material is printed within the gel, or a slurry of wood or metal, the printed part may cure within the gel, then be removed and placed into an oven for post-processing. Such a capability can greatly increase part strength, such as through a post-printing firing or sintering processes as used in ceramics and metal production, or a number of other interesting material capabilities.

### 5.5 Material Usage

Due to the removal of printed support material and the truly 3-dimensional nature of this printing process, much less material can be used for a printed part. This process does not require baths or beds full of powder or liquid resins. Similarly, the layer-based process and built-up printed support materials are quite wasteful in the total amount of material used compared with the material needed for the final part. In the methods described herein, it is not necessary to waste material.

### 6. Advantages & Improvements over Existing Methods

This technology offers significant improvement over existing methods of three-dimensional printing, including; SLA, SLA, FDM, Polyjet and powder-based printing. To date, three-dimensional printing has not made a significant impact in industrial manufacturing processes because of: 1) long printing times compared with injection molding or other manufacturing processes; 2) relatively small build volume limiting realistic applications; and 3) the availability of only low-quality printable plastics and other materials, the properties of which do not compare with industrial materials. The methods described herein dramatically improve upon each of these areas.

Since the methods described herein do not require support material to build overhangs or complex 3-dimensional structures, the structure can be made significantly faster. FDM, Polyjet and SLA technologies require supports that significantly increase the time required to print and the time after printing due to the need to remove the supports either manually or through dissolution. Without supports, the methods described herein can print the same complex three-dimensional shapes at the same time as reducing the need for additional unnecessary material, unnecessary time for printing and unnecessary post-printing processes. Once a structure is printed and the solidifying material solidifies (e.g., cures), the structures can be removed from the gel, simply washed off with water, and then they are finished. The methods utilize the gel's material structure to suspend the print in 3-dimensional space and allows for non-layer-based printing where the nozzle can move freely in all 3 axes at any time.

This technology also drastically increases the speed of printing by eliminating the requirement to print in successive layers. Nearly every printing process available today requires individual layers to be printed, layer-after-layer. This drastically increases the time required to print a tall or complex 3-dimensional form and requires sophisticated digital "slicing" techniques, producing large file sizes. For example, if a wireframe structure was to be printed using FDM, SLA, SLS, powder-based printing or Polyjet, it would need to be sliced with many layers and then printed in linear paths at each layer. The edges of the wireframe structure would also need to have support material printed underneath due to their cantilever and unsupported shape. In the methods described herein, these lines can simply be drawn in three-dimensional space, eliminating the support material and eliminating the slices. Another aspect that increases the speed of printing compared to other free-form or in-air three-dimensional printing processes is the speed of extrusion. Other processes require that the material be cured or hardened before the machine moves to the next layer or continues to move the nozzle. This drastically decreases the speed at which the robot or printer can move. In the methods described herein, the material is suspended in the gel in three-dimensional space, and therefore the nozzle can continue moving quickly and extruding materials that are suspended behind the nozzle path and solidified (e.g., chemically cured). Because of these factors, the speed of printing can likely be increased by many orders of magnitude compared to traditional printing processes.

As compared with traditional methods of 3-dimensional printing, the methods described herein are also scalable from very small-scale, high resolution to large-scale. Since the process is dramatically faster than any other methods, much larger structures can be built in less time. For example a 6"x6"x6" cube of material may require 24-48 hours to print on an SLA machine while it can take a few minutes in the methods described herein. The methods can also scale-up by using larger tanks of gel and larger industrial robots or gantry machines and allow very large structures to be produced extremely quickly. The speed and scale of the print may now be able to be compared with other industrial processes like injection molding or machining. Especially if the assembly time of a traditional product is taken into consideration, the methods described herein, which may not require any assembly since the entire product can be printed simultaneously, may drastically change manufacturing scenarios.

One of the most significant advances over traditional three-dimensional printing processes is the improvement in material properties. Because the method involves printing a solidifying material in a liquid or molten state and chemically curing that material, real-world, industrially produced materials can be used. Some examples of materials that can be used include polyurethane (PU) rubber, foam, plastics or any other liquid or molten material. In FDM printing a filament is produced, which then needs to be heated and extruded in a liquid form that then cools and hardens into the three-dimensional structure. This process limits the types of materials available for use, and the layered nature of the FDM printing process dramatically reduces the structural integrity of the printed part compared to injection molding. In SLS printing, the materials are even more limited because they need to be made into powders that then require sintering, which limits the range of available materials. The methods described herein use the same materials that are available today in many industrial manufacturing processes, and the materials do not require heating, sintering, or hot-extrusion; rather they are chemically or otherwise cured (e.g., photoinitiated polymerization). Similarly, the methods do not rely on successive layering, the consequence of which is that the parts can be as strong as parts made through traditional industrial processes. The methods described herein can also be used to print liquid slurry woods, biological materials, low-temperature liquid metals, cements or other types of materials that can be extruded into the gel substrate.

### 7. Applications

The methods described herein can be used to fabricate a wide variety of products. Examples include apparel and sports equipment; fabrication and manufacturing; aviation and automotive; furniture and interior products; architecture, engineering, and construction; and toys and consumer goods. The following are some examples of products within these categories.

Apparel & Sports Equipment: Printing 1:1 sports equipment (bikes, boards, boots, shoes, helmets, pads, etc.); Printed textiles; Marketing/commercial/PR applications with an innovative new process for in-store applications or high-tech appeal; Potentially as fast, or faster, than existing manufacturing processes, highly customized, industrial-quality materials (foams, rubbers, plastics), large-scale or small-scale parts; New design process with physical 3-dimensional 1:1 size/speed sketching.

Fabrication & Manufacturing: Large-scale tooling, prototyping, and fixturing; Potentially as fast, or faster, than existing manufacturing processes, highly customized, industrial-quality materials (foams, rubbers, plastics), large-scale or small-scale parts; Hybrid approaches with multiple fabrication processes (i.e. welded or cast metal parts inserted into the gel to receive a liquid printed part within/around/on top of the metal part).

Aviation and Automotive Applications: Large-scale printed parts for interior applications (panels, seats, shades, dashes, ceilings, floors); Medium-scale printed parts (seat cushions/structures, engine components, brackets, connectors); Large-scale printed parts for exterior panels; Tooling, prototyping, fixturing; Potentially as fast, or faster, than existing manufacturing processes, highly customized, industrial-quality materials (foams, rubbers, plastics), large-scale or small-scale parts; New design process with physical 3-dimensional 1:1 size/speed sketching

Furniture & Interior Products: Large-scale printed parts for interior applications (screens, installations, etc.); Medium-scale printed parts (seat cushions, seat structures, seat back/textiles, tables, desks, stools, shelves, etc.); Tooling, prototyping, fixturing; Marketing/commercial/PR applications with an innovative new process for in-store applications or high-tech appeal; Potentially as fast, or faster, than existing manufacturing processes, highly customized, industrial-quality materials (foams, rubbers, plastics), large-scale or small-scale parts; New design process with physical 3-dimensional 1:1 size/speed sketching

Architecture, Engineering & Construction: Large-scale tooling (blades, concrete form-work, support structures); Final structures (walls, surfaces, skin/panels, 1:1 details); Onsite fabrication process during construction due to speed/scale; New design process with physical 3-dimensional 1:1 size/speed sketching.

Toys and other Consumer goods: Printing 1:1 consumer goods/toys (bikes, boards, boots, shoes, helmets, pads, etc.); Potentially as fast, or faster, than existing manufacturing processes, highly customized, industrial-quality materials (foams, rubbers, plastics), large-scale or small-scale parts; New design process with physical 3-dimensional 1:1 size/speed sketching.

While example embodiments have been particularly shown and described, it will be understood by those skilled in the art that various changes in form and details may be made therein without departing from the scope of the embodiments encompassed by the appended claims.

## Claims

1. A method of making a three-dimensional object (180a), the method comprising:
a) positioning a nozzle (150) within a carbomer gel inside a container (160) of carbomer gel, wherein the nozzle further comprises a mixing portion (140) that mixes at least two compounds as they are deposited through the nozzle;
b) mixing the at least two compounds as they are deposited through the nozzle;
c) pneumatically or electrically controlling a flow of the mixed at least two compounds from the nozzle;
d) changing the position of the nozzle within the carbomer gel while depositing solidifying material which becomes part of the three-dimensional object, through the nozzle, whereby the carbomer gel supports the solidifying material as it is deposited, which is suspended within the carbomer gel; and
e) solidifying the solidifying material in the carbomer gel to form a solid material, the solid material being a three-dimensional object.

2. The method of claim 1, wherein the nozzle is affixed to a multi-axis machine (100), and wherein changing the position of the nozzle through the carbomer gel comprises moving one or more axes of the multi-axis machine to which the nozzle is affixed.

3. The method of claim 1, wherein depositing the solidifying material through the nozzle further comprises varying a rate at which the solidifying material is deposited.

4. The method of claim 3, wherein varying the rate at which the solidifying material is deposited by varying pressure applied to one or more pistons to extrude the solidifying material.

5. The method of claim 1, wherein changing the position of the nozzle within the carbomer gel further comprises changing the position of the nozzle at varying speeds.

6. The method of claim 1, comprising decreasing the volume of the solidifying material extruded per unit distance traveled by the nozzle by increasing the nozzle speed .

7. The method of claim 1, wherein the solidifying material is a polymer, a rubber, a pulp, a foam, a metal, a concrete, or an epoxy resin.

8. The method of claim 1, wherein the rubber is a silicone rubber.

9. The method of claim 1, wherein the carbomer gel does not scar.

10. The method of claim 1, wherein the carbomer gel is a water-based gel.

11. The method of claim 1, wherein the carbomer gel is a suspension.

12. The method of claim 1, wherein the solidifying material comprises two compounds that copolymerize, and wherein solidifying the solidifying material comprises allowing the two compounds to co-polymerize.

13. The method of claim 1, wherein changing the position of the nozzle comprises changing the position of the nozzle within the carbomer gel in three through six axes simultaneously, for at least a portion of time.

## Patentansprüche

1. Verfahren zur Herstellung eines dreidimensionalen Gegenstands (180a), wobei das Verfahren umfasst:
a) Positionieren einer Düse (150) innerhalb eines Carbomergels in einem Behälter (160) für Carbomergel, wobei die Düse ferner einen Mischabschnitt (140) umfasst, der mindestens zwei Verbindungen mischt, während sie durch die Düse abgegeben werden;
b) Mischen der mindestens zwei Verbindungen, während sie durch die Düse abgegeben werden;
c) pneumatisches oder elektrisches Steuern eines Flusses der gemischten mindestens zwei Verbindungen von der Düse;
d) Ändern der Position der Düse innerhalb des Carbomergels, während durch die Düse ein sich verfestigendes Material abgegeben wird, das Teil des dreidimensionalen Gegenstands wird, wobei das Carbomergel das sich verfestigende Material an der Position stützt, an der das sich verfestigende Material abgegeben wird, das innerhalb des Carbomergels suspendiert ist; und
e) Verfestigen des sich verfestigenden Materials im Carbomergel, um ein festes Material zu bilden, wobei das feste Material ein dreidimensionaler Gegenstand ist.

2. Verfahren nach Anspruch 1, wobei die Düse an einer Mehrachsenmaschine (100) befestigt ist und wobei das Ändern der Position der Düse durch das Carbomergel das Bewegen einer oder mehrerer Achsen der Mehrachsenmaschine umfasst, an der die Düse befestigt ist.

3. Verfahren nach Anspruch 1, wobei das Abgeben des sich verfestigenden Materials durch die Düse ferner das Variieren einer Rate umfasst, mit der das sich verfestigende Material abgegeben wird.

4. Verfahren nach Anspruch 3, wobei das Variieren der Rate, mit der das sich verfestigende Material abgegeben wird, durch Variieren eines Drucks umfasst ist, der auf einen oder mehrere Kolben ausgeübt wird, um das sich verfestigende Material zu extrudieren.

5. Verfahren nach Anspruch 1, wobei das Ändern der Position der Düse innerhalb des Carbomergels ferner das Ändern der Position der Düse mit unterschiedlichen Geschwindigkeiten umfasst.

6. Verfahren nach Anspruch 1, umfassend das Verringern des Volumens des extrudierten sich verfestigenden Materials pro von der Düse zurückgelegter Strecke durch Erhöhen der Düsengeschwindigkeit.

7. Verfahren nach Anspruch 1, wobei das sich verfestigende Material ein Polymer, ein Gummi, ein Zellstoff, ein Schaumstoff, ein Metall, ein Beton oder ein Epoxidharz ist.

8. Verfahren nach Anspruch 1, wobei das Gummi ein Silikongummi ist.

9. Verfahren nach Anspruch 1, wobei das Carbomergel keine Narben bildet.

10. Verfahren nach Anspruch 1, wobei das Carbomergel ein Gel auf Wasserbasis ist.

11. Verfahren nach Anspruch 1, wobei das Carbomergel eine Suspension ist.

12. Verfahren nach Anspruch 1, wobei das sich verfestigende Material zwei Verbindungen umfasst, die copolymerisieren, und wobei das Verfestigen des sich verfestigenden Materials das Zulassen umfasst, dass die zwei Verbindungen copolymerisieren.

13. Verfahren nach Anspruch 1, wobei das Ändern der Position der Düse das Ändern der Position der Düse innerhalb des Carbomergels in drei bis sechs Achsen gleichzeitig für zumindest einen Zeitraum umfasst.

## Revendications

1. Procédé de fabrication d'un objet tridimensionnel (180a), le procédé comprenant :
a) le positionnement d'une buse (150) au sein d'un gel carbomère à l'intérieur d'un récipient (160) de gel carbomère, la buse comprenant en outre une partie de mélange (140) qui mélange au moins deux composés pendant qu'ils sont déposés par la buse ;
b) le mélange des au moins deux composés pendant qu'ils sont déposés par la buse;
c) la commande pneumatique ou électrique d'un débit des au moins deux composés mélangés provenant de la buse ;
d) le changement de la position de la buse au sein du gel carbomère tout en déposant un matériau se solidifiant qui devient partie de l'objet tridimensionnel par la buse, grâce à quoi le gel carbomère soutient le matériau se solidifiant à l'endroit où le matériau se solidifiant est déposé, lequel est en suspension au sein du gel carbomère; et
e) la solidification du matériau se solidifiant dans le gel carbomère pour former un matériau solide, le matériau solide étant un objet tridimensionnel.

2. Procédé selon la revendication 1, la buse étant fixée à une machine multi-axes (100), et le changement de la position de la buse à travers le gel carbomère comprenant le déplacement d'un ou plusieurs axes de la machine multi-axes à laquelle la buse est fixée.

3. Procédé selon la revendication 1, le dépôt du matériau se solidifiant par la buse comprenant en outre la variation d'un taux auquel le matériau se solidifiant est déposé.

4. Procédé selon la revendication 3, la variation du taux auquel le matériau se solidifiant est étant réalisée en variant une pression appliquée sur un ou plusieurs pistons pour extruder le matériau se solidifiant.

5. Procédé selon la revendication 1, le changement de la position de la buse au sein du gel carbomère comprenant en outre le changement de la position de la buse à des vitesses variables.

6. Procédé selon la revendication 1, comprenant la diminution du volume du matériau se solidifiant extrudé par unité de distance parcourue par la buse en augmentant la vitesse de la buse.

7. Procédé selon la revendication 1, le matériau se solidifiant étant un polymère, un caoutchouc, une pâte, une mousse, un métal, un béton ou une résine époxy.

8. Procédé selon la revendication 1, le caoutchouc étant un caoutchouc de silicone.

9. Procédé selon la revendication 1, le gel carbomère ne cicatrisant pas.

10. Procédé selon la revendication 1, le gel carbomère étant un gel à base d'eau.

11. Procédé selon la revendication 1, le gel carbomère étant une suspension.

12. Procédé selon la revendication 1, le matériau se solidifiant comprenant deux composés qui copolymérisent, et la solidification du matériau se solidifiant comprenant le fait de permettre aux deux composés de copolymériser.

13. Procédé selon la revendication 1, le changement de la position de la buse comprenant le changement de la position de la buse au sein du gel carbomère dans trois à six axes simultanément, pendant au moins une partie du temps.
